# EUROPÄISCHE PATENTSCHRIFT

(11) **EP 0 479 253 B1**
(45) Veröffentlichungstag und Bekanntmachung des Hinweises auf die Patenterteilung: **01.03.1995**
(21) Anmeldenummer: 91116792.2
(22) Anmeldetag: 01.10.1991
(51) Int. Cl.: C04B 35/48, C04B 35/66, F27D 1/08

(54) **Verfahren zur Herstellung grossformatiger, zur Auskleidung von insbesondere Soda-Kalk-Kieselglasschmelzanlagen dienender Formkörper**
Process for the production of large sized bodies serving as lining, especially for a soda-lime-silica melting plant
Procédé pour la préparation d'un moulage de grande dimension, pour la revêtement d'une installation de fusion d'un verre calcaire sodium

(30) Priorität: 05.10.1990 DE 4031467
(43) Veröffentlichungstag der Anmeldung: 08.04.1992
(73) Patentinhaber: DYKO INDUSTRIEKERAMIK GMBH, D-40521 Düsseldorf (DE)
(72) Erfinder: Goerenz, Edmund, Dipl.-Mineraloge, W-5110 Alsdorf-Hoengen (DE)
(74) Vertreter: Rehberg, Elmar, Dipl.-Ing.

(56) Entgegenhaltungen:
- EP-A- 0 147 327
- EP-A- 0 252 598
- EP-A- 0 398 278
- FR-A- 2 552 756
- CHEMICAL ABSTRACTS, vol. 112, no. 20, 14. Mai 1990, Columbus, Ohio, US;abstract no. 184696S, T.NAKADA ET AL.: 'MANUFACTURE OF ZIRCONIA-CONTAININGALUMINA CERAMICS' Seite 341 ;Spalte L ;
- JOURNAL OF MATERIALS SCIENCE Bd. 24, Nr. 11, 1989, LONDON Seiten 2711 - 2721;J.P.BACH ET AL.: 'FABRICATION AND CHARACTERIZATION OF ZIRCONIA-TOUGHENEDALUMINA OBTAINED BY INORGANIC AND ORGANIC PRECURSORS'
- WORLD PATENTS INDEX LATEST Week 8336, Derwent Publications Ltd., London, GB; AN83-757614

## Beschreibung

Die Erfindung bezieht sich auf ein Verfahren zur Herstellung großformatiger, zur Auskleidung von insbesondere Soda-Kalk-Kieselglasschmelzanlagen dienender Formkörper nach dem Oberbegriff des Patentanspruchs 1 sowie einen großformatigen, zur Ausbildung von insbesondere Soda-Kalk-Kieselglasschmelzanlagen dienenden Formkörper. Die Formkörper können auch zur Auskleidung von Anlagen zum Schmelzen borhaltiger Gläser eingesetzt werden.

Die Erfindung zielt darauf ab, einen homogenen, korrosionsbeständigen Formkörper zu schaffen, der sich industriell herstellen und in Verbindung mit insbesondere Soda-Kalk-Kieselglasschmelzanlagen einsetzen läßt. Es sollen insbesondere Formkörper herstellbar sein, die als Palisaden, als Bodenplatten, also Durchlaßsteine und sonstige Formsteine bei der Auskleidung von Glaswannen benutzt werden.

Aus Chemical Abstracts, Abstract No. 18 46 96 S, Vol. 112, No. 20, 14. Mai 1990 und JP 01 234 354 ist ein Verfahren zur Herstellung von keramischen Formkörpern mit hoher Festigkeit sowie hoher Bruchhärte und hoher Abriebbeständigkeit bekannt. Die Formkörper werden durch Vermischen von Al₂O₃ in einem Anteil von 60 bis 90 Gew.%, von ZrO₂ in einem Anteil von 9 bis 37 Gew.% und von CeO₂ in einem Anteil von 1 bis 10 Gew.%, Formen des Formkörpers und anschließendes Sintern bei 1480° bis 1700° hergestellt. Die kristalline Phase der keramischen Struktur besteht vornehmlich aus tetragonalem ZrO₂ und α-Al₂O₃.

Ein Verfahren zur Herstellung großformatiger, zur Auskleidung von insbesondere Soda-Kalk-Kieselglasschmelzanlagen dienender Formkörper ist aus der Zeitschrift "Silikattechnik 21 (1970)" S. 306 bis 313 bekannt. Dort wird über schmelzflüssig gegossene Formkörper des Dreistoffsystems Al₂O₃ - ZrO₂ - SiO₂ berichtet. Die Korrosionsbeständigkeit dieser Formkörper, insbesondere im Bereich des Badspiegels der Glasschmelze, gehört zu den bedeutungsvollsten Eigenschaften der Formkörper, da sie die Lebensdauer der Ofenausmauerung sowie die Qualität der geschmolzenen Glasmasse mitbestimmen. Das Material des Formkörpers soll einen möglichst hohen Zirkoniumoxidgehalt und einen möglichst niedrigen Siliziumdioxidgehalt aufweisen, wobei jedoch jeder der drei Komponenten ihre besondere Bedeutung zukommt. Der Siliziumdioxidgehalt ist im wesentlichen dafür bestimmend, daß das Material in den schmelzflüssigen Zustand überführt werden kann. Je höher jedoch der Anteil des Zirkoniumoxids ist, desto besser wird die Korrosionsbeständigkeit. Oberhalb eines Anteils von 60 Gewichts% erbringt der weitere Zusatz von Zirkoniumoxid jedoch keine wesentliche Verbesserung der Korrosionsbeständigkeit. Eine gewisse Menge der Glasphase, also des Siliziumdioxids, in der Grundmasse erscheint auch zur Dämpfung des Einflusses von Modifikationsumwandlungen unumgänglich.

Auch in der Tonindustriezeitung TIZ-Zbl. 86 (1962) S. 504 bis 509 wird "Die Entwicklung von schmelzflüssig gegossenen Glaswannensteinen" beschrieben. Auch solche Steine weisen als Hauptbestandteile Aluminiumoxid, Zirkoniumoxid und Siliziumdioxid auf. Zur Herstellung ist es möglich, Al₂O₃ und ZrSiO₄ zu mischen und in einem Lichtbogenofen zu schmelzen, wobei dabei ein flüssiges Material entsteht, welches in der typischen Weise in Formen gegossen wird und dort gezielt zur Abkühlung geführt wird. Die Formkörper werden dann anschließend durch Schneiden und Schleifen auf das entsprechend gewünschte Maß abgearbeitet.

Die bekannten schmelzflüssig gegossenen Formkörper weisen eine Reihe von Vorteilen auf. In solchen Werkstoffbereichen, bei denen das Zirkoniumoxid in dem Aluminiumoxid gelöst und wieder ausgeschieden ist, was durch den Schmelz- und Abkühlprozeß bewirkt wird, ist eine besonders gute Korrosionsbeständigkeit gegen Soda-Kalk-Kieselglas festzustellen. Diese Korrosionsbeständigkeit ist umso besser, in je feinerer Verteilung das Zirkoniumoxid in dem Aluminiumoxid vorliegt. Bedingt durch den typischen Herstellprozeß der schmelzflüssig gegossenen Formkörper in Verbindung mit dem Siliziumdioxidgehalt besitzen solche Formkörper vorteilhaft eine sehr kleine Porosität, die im allgemeinen 2 % unterschreitet. Damit sind sie für das in der Schmelzanlage erschmolzene Glas vorteilhaft schlecht benetzbar. Die Formkörper weisen auch noch andere Eigenschaften auf, die für Anlagen zum Erschmelzen von Glas an sich weniger wichtig sind, beispielsweise eine hohe Abriebbeständigkeit.

Schmelzflüssig gegossene Formkörper der beschriebenen Art besitzen jedoch auch gravierende Nachteile: Bedingt durch den Herstellungsvorgang weisen sie eine ausgeprägte Heterogenität auf, wobei die Formkörper in den Randbereichen einen höheren Glasphasenanteil aufweisen als im Innern des Formkörpers. Umgekehrt ergibt sich infolge der Abkühlung in der Mitte der Formkörper ein vergleichsweise größeres Kristallwachstum und damit eine grobere Verteilung zwischen Aluminiumoxid und Zirkonoxid. Günstige Partien des Formkörpers ergeben sich deshalb weder im Randbereich noch im Mittelbereich, sondern in einer gewissen Materialtiefe. Infolge dieser ausgeprägten Heterogenität neigen solche schmelgegossenen Formkörper zum sogenannten Ausschwitzen. Bei einer neu zugestellten Glaswanne löst sich deshalb zunächst das Siliziumdioxid aus den Randbereichen aus und wandert in die Glasschmelze, was an sich keinen Nachteil darstellt. Durch das Auswandern des Siliziumdioxids geht jedoch der Zusammenhalt mit den übrigen Bestandteilen verloren und es erfolgt ein Abbau der Dicke der Formkörper. Kristalle aus Aluminiumoxid, Zirkoniumoxid oder aus beiden Oxiden gelangen in die Glasschmelze und führen zu Glasfehlern in Form von Schlieren, Streifen u. dgl. In der gattungsbildenden Druckschrift wird dieser Nachteil mit dem Begriff "Steinchenbildung" gekennzeichnet. Insoweit wird auch verständlich, daß der Siliziumdioxidanteil des Dreiphasensystems an sich nachteilig ist, weil er die Korrosionsanfälligkeit im wesentlichen bestimmt. Andererseits kann aber herstellungsbedingt auf das Siliziumdioxid nicht verzichtet werden, um den schmelzflüssigen Zustand des Stoffgemischs bei sinnvollen Schmelztemperaturen herbeizuführen.

Weiterhin ist nachteilig, daß diese schmelzflüssig gegossenen Formkörper gezielt über längere Zeit mit vorgegebener Temperaturführung abgekühlt werden müssen. Trotzdem lassen sich dabei Kavernen, Lunker o. dgl. nicht vermeiden. Gemäß "Keramische Zeitschrift Nr. 9, 185" S. 457 bis 465 (460) waren deshalb die Fortschritte bei der Herstellung der schmelzgegossenen, zirkonhaltigen Steine der letzten Jahre auf Lunkerfreiheit, Verbesserung der Korrosionsbeständigkeit und Temperaturwechselbeständigkeit durch gezielte Änderung des Gefügeaufbaus und Herabsetzung der beim Erhitzen ausschwitzenden Schmelzphase gerichtet. Es wurde auch bereits beobachtet, daß die sich bildenden Lunker zumindest teilweise von groß wachsenden Kristallen besetzt bzw. angefüllt wurden.

Als wesentlicher Bestandteil mit möglichst hohem Anteil solcher schmelzgegossener Formkörper wird das Zirkoniumoxid angesehen. Es sind deshalb auch bereits Untersuchungen der Stabilisierung des Zirkonoxids durch Kalziumoxid oder Magnesiumoxid bekannt (Berichte der Deutschen Keramischen Gesellschaft 50 (1973), S. 365 bis 368). Dort wird davon berichtet, daß das Zirkonoxid je nach Temperatur verschiedene Modifikationen durchläuft. Eine solche Modifikationsänderung ist immer mit einer Volumenänderung verbunden. Es ist eine monokline, eine tetragonale sowie eine kubische Modifikation bekannt. Solchen Modifikationsänderungen kann durch Dotierung mit Kalziumoxid oder Magnesiumoxid entgegengewirkt werden, was dazu führt, daß die tetragonale Modifikation beibehalten bleibt.

Der Erfindung liegt die Aufgabe zugrunde, ein Herstellverfahren für großformatige Formkörper sowie solche großformatigen Formkörper aufzuzeigen, das für die industrielle Anwendung bei der Herstellung von Formkörpern, die zur Auskleidung von insbesondere Soda-Kalk-Kieselglasschmelzanlagen vorgesehen sind und eine verbesserte Korrosionsbeständigkeit aufweisen, geeignet ist. Weiterhin soll ein kostengünstig herstellbarer Formkörper für Soda-Kalk-Kieselglasschmelzanlagen aufgezeigt werden.

Erfindungsgemäß wird dies bei einem Verfahren nach dem Oberbegriff des Patentanspruchs 1 durch die kennzeichnenden Merkmale des Patentanspruchs 1 erreicht. In der Vorstufe wird also zunächst ein Pulver hergestellt, in dem auf jeden Fall metallorganische Verbindungen des Aluminium und des Zirkonium durch einen Verbrennungsvorgang in ein hochdisperses keramisches Pulver umgewandelt werden. Es ist besonders zweckmäßig, auch eine metallorganische Verbindung eines Elements aus der Stoffgruppe Kalzium, Magnesium, Cer oder Yttrium in diesen Verbrennungsvorgang einzubeziehen, um während des Verbrennungsvorgangs eine feine Verteilung des Stabilisators zu erreichen. Es ist aber auch möglich, den Stabilisator beispielsweise als Salz oder in Form einer Lösung hinzuzufügen. Bei dem Verbrennungsvorgang entsteht eine hohe Prozeßwärme, so daß der Verbrennungsvorgang von selbst aufrechterhalten bleibt. Es entsteht ein hochdisperses, feines keramisches Pulver, welches je nach den Ausgangsmaterialien auf jeden Fall Al₂O₃ und ZrO₂ sowie zusätzlich dann noch CeO₂, Y₂O₃, CaO oder MgO enthält. Es versteht sich, daß als Stabilisator nur eine der genannten Verbindungen aus der Stoffgruppe eingesetzt werden sollte. Ein solches Pulver besitzt seine Anteile in sehr feiner Verteilung mit großer Homogenität. Das Gemenge läßt sich insbesondere isostatisch verpressen, indem es beispielsweise in Gummiformen gefüllt, evakuiert und dann unter Druck gesetzt wird. Andere Formgebungsverfahren sind das Schlickergießen oder das Vibrationsverdichten. Auf jeden Fall schließt sich ein Sintervorgang an, der vorzugsweise in einem Gas- oder Elektroofen etwa bei Temperaturen zwischen 1300 und 1750°C durchgeführt wird. Anschließend wird das Material abgekühlt und ggf. weiterbehandelt.

Das neue Herstellverfahren führt zu Formkörpern, die gegenüber den schmelzgegossenen Formkörpern erhebliche Vorteile aufweisen. Die Erfindung bewegt sich praktisch nicht mehr in einem Dreistoffsystem, sondern in einem Zweistoffsystem, weil das Material praktisch glasfrei ist. Unter dem Gesichtspunkt der Korrosionsbeständigkeit ist die Glasfreiheit optimal. Aus Gründen der erleichterten Herstellung kann es zweckmäßig sein, einige wenige % Glasphase zuzulassen. Es entfällt auch der im Stand der Technik bekannte Nachteil des Ausschwitzens bei Betriebsaufnahme. Es entfallen auch Maßveränderungen, die bisher durch Werkstoffabbau unvermeidlich waren. Durch den besonderen vorgeschalteten Prozeß der Pulverherstellung ergibt sich eine besonders hohe Homogenität, also eine besonders feine Verteilung des Zirkonoxids im Aluminiumoxid. Hierdurch wiederum bedingt wird die Korrosionsbeständigkeit erheblich verbessert, was auch zu einer Verlängerung der Betriebszeit derartiger Schmelzanlagen führt. Durch die verbesserte Korrosionsbeständigkeit und die weitgehend gleichmäßigen Materialeigenschaften über die Dicke der Formkörper ergibt sich die Möglichkeit, vergleichsweise dünnere Formkörper an solchen Schmelzanlagen einzusetzen, also diesbezüglich auch Material einzusparen.

Es ist möglich, das Pulver mit weiterem feuerfestem Oxid, nämlich Al₂O₃, zu mischen und danach solche Gemische isostatisch zu verpressen. Auch die anderen Formgebungsverfahren wie Schlickergießen, Vibrationsverdichten u. dgl. sind möglich. Dabei reduziert sich der Anteil des Zirkonoxids relativ zu dem sich erhöhenden Anteil des Aluminiumoxids. Wenn dies in der beschriebenen feinen Verteilung geschieht, ist dies für die Eigenschaft der Korrosionsbeständigkeit nicht nachteilig, jedoch mit dem Vorteil verbunden, daR sich derartige Formkörper vergleichsweise preiswerter herstellen lassen. Es ist möglich, in den besonders gefährdeten Bereichen einer Glasschmelzanlage, also im Bereich des Badspiegels, solche Materialien einzusetzen, bei denen der Zirkonoxidgehalt relativ hoch ist, während in den übrigen Bereichen Formkörper Anwendung finden, bei denen das Material durch zusätzliche Hinzufügung des Aluminiumoxids gestreckt ist.

Besonders sinnvoll ist es, daß das weitere feuerfeste Oxid, also das Al₂O₃, in einer Kornfraktion bis zu 3,0 mm hinzugefügt wird. Es ist hier an eine Kornfraktion im Bereich von 1,0 bis 3,0 mm gedacht. Auch die Hinzufügung einer Kornfraktion im Mittelkornbereich, also etwa zwischen 0,5 bis 1,0 mm und deren anteilmäßige Wahl kann sinnvoll sein. Der Einsatz eines solchen Grobkorns zielt darauf ab, die Löslichkeit des Al₂O₃ in der Glasschmelze zu erschweren. Dennoch muß das Grobkorn durch eine Bindephase eingebunden und in Formkörpern festgehalten werden. Für die Bindephase wird das feinere Material eingesetzt.

Es ist sogar möglich, daß das weitere feuerfeste Oxid mit einem den Anteil des Pulvers übersteigenden Anteil zugemischt wird. Damit werden besonders hohe Anteile Al₂O₃ möglich, die die Viskosität der Glasschmelze im Grenzbereich heraufsetzen, um damit die Korrosion der Formkörper zu mindern. Das durch den Verbrennungsvorgang gebildete Pulver bildet dann die Bindephase. Wesentliche Werkstoffeigenschaften werden in diesem Fall durch das weitere feuerfeste Oxid, nämlich das Al₂O₃, welches hinzugemischt wurde, festgelegt.

Das weitere feuerfeste Oxid kann im Naßverfahren dem Pulver zugemischt werden und danach einer Sprühtrocknung unterworfen werden, bevor das Formen erfolgt. Ein solches Naßverfahren hat den Vorteil einer äußerst homogenen und feinen Verteilung der Einsatzkomponenten. Die Sprühtrocknung stellt ein bekanntes, leicht handhabbares Verfahren dar, um letztlich wiederum zu trockenem Material zu gelangen, welches dann in die Preßformen eingeführt wird. Es ist aber auch möglich, daß das Mischen des Pulvers mit dem weiteren feuerfesten Oxid in trockenem Zustand erfolgt. Hierbei ergibt sich der Vorteil der Energieeinsparung.

Bei der Pulverherstellung durch einen Verbrennungsvorgang können als metallorganische Verbindungen insbesondere Acetate, Butylate, Stearate usw. Verwendung finden. Wenn diese metallorganischen Verbindungen in flüssiger Form vorliegen, erleichtert dies den Vermischungsvorgang vor der Verbrennung.

Die metallorganischen Verbindungen des Aluminium und des Zirkonium sowie die zusätzliche Verbindung können in einem solchen Verhältnis eingesetzt werden, daß das Gemenge zur Ausbildung der Formkörper einen Anteil von mindestens 30 Gew.% Al₂O₃, ZrO₂ in einem Anteil von 10 bis 60 Gew.% und CeO₂ in einem Anteil von 1 bis 10 Gew.% aufweist. Statt des CeO₂ können 0,4 bis 2,5 Gew.% MgO, 0,5 bis 3 Gew.% CaO oder 1 bis 8 Gew.% Y₂O₃ eingesetzt werden. Die wesentlichen Bestandteile sind auch hier Al₂O₃ und ZrO₂, und zwar unter Vermeidung des SiO₂. Die stabilisierende Oxidkomponente richtet sich in ihrem Anteil dabei nach dem Anteil des Zirkonoxids und nach der Auswahl des benutzten Stoffs. Die angegebenen Prozentzahlen beziehen sich sowohl auf den Fall, daß Al₂O₃ als weiteres feuerfestes Oxid hinzugefügt wird, als auch auf den Fall, daß ohne eine solche weitere Hinzufügung gearbeitet wird.

Es ist möglich, daß das Pulver in der Phase ε-Al₂O₃ eingesetzt wird. Dies erscheint zumindest teilweise möglich. In dieser Phase ist das ZrO₂ im Al₂O₃-Kristallgitter gelöst, wodurch sich eine besonders hohe Korrosionsbeständigkeit des Formkörpers ergibt.

Es ist weiterhin vorteilhaft, daß das Gemenge aus Alumiumoxid, Zirkonoxid und einem der Oxide aus der genannten Stoffgruppe nach dem Verbrennungsvorgang gemahlen wird, bevor die Formgebung der Formkörper erfolgt. Durch diesen Mahlvorgang soll die Ansammlung von Partikeln, die sich möglicherweise beim Verbrennungsvorgang gebildet haben, zerstört werden, um eine bessere und feinere Homogenität zu erreichen. Dieser Mahlvorgang begünstigt auch gleichzeitig den Sintervorgang, der an die Formgebung der Formkörper anschließt.

Der Sintervorgang kann zweckmäßig bei Temperaturen zwischen 1300 und 1750°C erfolgen. Die höheren Temperaturen werden dann gewählt, wenn es auf eine innige und festere Verbindung der Bestandteile im Formkörper ankommt, also insbesondere bei Verwendung einer Großkornfraktion. Bei Verwendung von reaktiven Oxiden als weitere feuerfeste Oxide können eher die niedrigeren Sintertemperaturen angewendet werden.

Der erfindungsgemäße, großformatige, zur Auskleidung von insbesondere Soda-Kalk-Kieselglasschmelzanlagen dienende Formkörper enthält im wesentichen Al₂O₃ einerseits und ZrO₂ andererseits in feiner, homogener Verteilung, ist im wesentlichen glasfrei und enthält zur Stabilisierung eines nennenswerten Anteils des ZrO₂ einen geringen Anteil eines Oxids eines Elements aus der Stoffgruppe Kalzium, Magnesium, Cer oder Yttrium, wobei der Formkörper einen grobkörnigen, verteilt angeordneten Anteil von Al₂O₃ sowie eine Bindephase aus Al₂O₃, ZrO₂ und einem Anteil des Oxids aus der Stoffgruppe Kalzium, Magnesium, Cer oder Yttrium aufweist. Damit wird im Gegensatz zu den schmelzgegossenen Formkörpern ein Sinterkörper geschaffen, der zumindest gleichwertige Eigenschaften zu den schmelzgegossenen Formkörpern, in verschiedener Hinsicht sogar bessere Eigenschaften aufweist. Für die Herstellung des Formkörpers eignen sich zur Stabilisierung die Metalloxide aus der genannten Stoffgruppe gleichermaßen. Für den Einsatz des Formkörpers in einer Soda-Kalk-Kieselglasschmelzanlagen ergeben Cer- oder Yttriumoxid besonders gute Langzeiteigenschaften. Der Formkörper weist die schon beschriebenen Eigenschaften auf. Der Formkörper weist Al₂O₃ in einem Anteil von mindestens 30 Gew.%, ZrO₂ in einem Anteil von 10 bis 60 Gew.% und CeO₂ in einem Anteil von 1 bis 10 Gew.% auf. Statt des CeO₂ kann auch als Stabilisator z. B. MgO in Gewichtsanteilen zwischen 0,4 und 2,5 Gew.% Verwendung finden. Alternativ kann auch CaO als Stabilisator in Gewichtsanteilen zwischen 0,5 und 3 Gew.% oder auch Y₂O₃ in Gewichtsanteilen von 1 bis 8 Gew.% eingesetzt werden.

Die Erfindung wird anhand einiger Ausführungsbeispiele weiter erläutert:
In einer ersten Gruppe von Ausführungsbeispielen werden Verbindungen des Cer als Stabilisator benutzt. Bei einer Ausführungsvariante wird Aluminiumbutylat und Zirkonbutylat sowie Cernitrat, gelöst in Isopropanol, in flüssiger Form gemischt und gemeinsam einem Verbrennungsvorgang unterworfen, durch welchen das hochdisperse keramische Pulver entsteht. Die einzelnen Anteile werden so bestimmt und festgelegt, daß man am fertigen Formkörper 88,5 Gew.% Al₂O₃, 10 Gew.% ZrO₂ und 1,5 Gew.% CeO₂ analysieren kann. Das durch den Verbrennungsvorgang in feiner Verteilung erzeugte keramische Pulver wurde sodann einem isostatischen Verpressungsvorgang unterworfen. Es wurden Formkörper mit den Abmessungen im Bereich 600 x 300 x 100 mm gepreßt. Der anschließende Sintervorgang geschah bei einer Maximaltemperatur von 1750°C und erstreckte sich über einen Zeitraum von 20 Tagen. Der Formkörper wies eine besonders hohe Dichte, geringe Porosität und homogene Verteilung der einzelnen Komponenten auf, so daß er an besonders gefährdeten Stellen einer Soda-Kalk-Kieselglasschmelzanlage vorteilhaft eingesetzt werden kann.

Eine weitere Ausführungsvariante ergab 71 Gew.% Al₂O₃, 25 Gew.% ZrO₂ und 4 Gew.% CeO₂ am fertigen Formkörper. Die Verhältnisse können noch so weit verschoben werden, daß am fertigen Formkörper 30 Gew.% Al₂O₃, 60 Gew.% ZrO₂ und 10 Gew.% CeO₂ feststellbar sind. Mit der Erhöhung des ZrO₂-Anteils verbessert sich auch die Korrosionsbeständigkeit.

Bei einer zweiten Gruppe von Ausführungsbeispielen wurde Yttriumoxid als Stabilisator benutzt. Aluminiumacetat wurde mit Zirkonbutylat in flüssiger Form gemischt und verbrannt. Dem dabei entstandenen Pulver wurde Y₂O₃ in Pulverform hinzugemischt und auf diese Weise das Gemenge erzielt. Es schloß sich ein Mahlprozeß an, um die beim Verbrennungsvorgang gebildeten Agglomerate zu zerschlagen. Das Pulver aus den drei Bestandteilen wurde einer Sprühtrocknung unterzogen, um es besser handhabbar zu machen. Das Gemenge wurde in feste Formen eingebracht und axial verdichtet. Die so entstandenen Formkörper wurden bei maximal 1700°C gesintert. Am fertigen Formkörper liegt das Al₂O₃ mit 88,8 Gew.%, das ZrO₂ mit 10 Gew.% und das Y₂O₃ mit 1,2 Gew.% vor. Es ergaben sich vergleichbare Eigenschafen zu den Formkörpern, die mit Ceroxid als Stabilisator hergestellt waren. Auch bei solchen Ausführungsbeispielen lassen sich die gewichtsmäßigen Anteile in gewissen Bereichen ändern bzw. wählen. Um die Korrosionsbeständigkeit zu verbessern, kann das Zirkonoxid wiederum bis auf 60 Gewichtsanteile gesteigert werden, wozu etwa 32 Gew.% Al₂O₃ und 8 Gew.% Y₂O₃ gehören.

Schließlich ist es noch möglich, MgO oder CaO als Stabilisatoren zu benutzen. Aluminiumbutylat und Zirkoniumbutylat wurden nach Mischung zu dem hochdispersen Pulver verbrannt. Das Pulver wurde mit Kalziumlävulinat in Wasser gelöst, so daß ein Schlicker entstand, der in Formen gegossen wurde. Nach dem Trocknen und dem Entformen wurde bei 1650°C gesintert. Am fertigen Formkörper ergaben sich Anteile von 58 Gew.% Al₂O₃, 40 Gew.% ZrO₂ und 2 Gew.% CaO. Ein solcher Formkörper läßt sich an weniger hoch beanspruchten Stellen einer Glasschmelzanlage vorteilhaft einsetzen.

Bei einem weiteren Beispiel wurde dem Pulver Al₂O₃ als weiteres feuerfestes Oxid hinzugefügt. Es wurde zunächst ein Pulver durch einen Verbrennungsvorgang hergestellt, wie dies unter Verwendung des Ceroxids oben beschrieben wurde. Diesem Gemenge wurde Al₂O₃ als Schmelzkorund mit einer Grobkornfraktion von 1 bis 3 mm und einer Mittelkornfraktion von 0,5 bis 1 mm hinzugefügt. Der Schmelzkorung wurde in einem Verhältnis Grobkorn zu Mittelkorn im Verhältnis von 4:1 eingesetzt. Es wurden gleiche Anteile des durch den Verbrennungsvorgang erzeugten Pulvers und des als Schmelzkorund hinzugefügten Al₂O₃ eingesetzt. Die anteiligen verhältnisse von Al₂O₃, ZrO₂ und CeO₂ wurden so gewählt, wie bei dem obigen Beispiel beschrieben. Nach dem isostatischen Pressen der Formkörper wurde ein Sintervorgang im Bereich 1700 bis 1750°C angeschlossen. Die Porosität lag hier etwas höher als bei dem einleitend erwähnten Ausführungsbeispiel. Dennoch ergab sich ein fester, inniger Verbund der groben Kornfraktion in der Bindephase. Das Grobkorngefüge hatte zudem noch den Vorteil einer besseren Temperaturwechselbeständigkeit.

## Patentansprüche

1. Verfahren zur Herstellung großformatiger, zur Auskleidung von insbesondere Soda-Kalk-Kieselglasschmelzanlagen dienender Formkörper, wobei ein Gemenge aus Aluminiumoxid (Al₂O₃), Zirkonoxid (ZrO₂) und einem als Stabilisator dienenden Oxid eines Elements aus der Stoffgruppe Kalzium, Magnesium, Cer oder Yttrium erzeugt wird, das Gemenge zu den Formkörpern verpreßt, vergossen oder verdichtet wird und die Formkörper einem Sintervorgang unterworfen werden, dadurch gekennzeichnet, daß als Ausgangsmaterial für das Gemenge metallorganische Verbindungen des Aluminium und Zirkonium innigst gemischt und durch einen Verbrennungsvorgang in ein hochdisperses keramisches Pulver umgewandelt werden, wobei eine Verbindung des Elements aus der genannten Stoffgruppe vor oder nach dem Verbrennungsvorgang hinzugefügt wird.

2. Verfahren nach Anspruch 1, dadurch gekennzeichnet, daß das Pulver mit weiterem feuerfestem Oxid, insbesondere Al₂O₃, gemischt und danach dieses Gemisch isostatisch verpreßt wird.

3. Verfahren nach Anspruch 2, dadurch gekennzeichnet, daß das weitere feuerfeste Oxid in einer Kornfraktion bis zu 3,0 mm zugeführt wird.

4. Verfahren nach Anspruch 2 und 3, dadurch gekennzeichnet, daß das weitere feuerfeste Oxid mit einem den Anteil des Pulvers übersteigenden Anteil zugemischt wird.

5. Verfahren nach Anspruch 2, dadurch gekennzeichnet, daß das weitere feuerfeste Oxid im Naßverfahren dem Pulver zugemischt wird und danach einer Sprühtrocknung unterworfen wird, bevor das Pressen erfolgt.

6. Verfahren nach Anspruch 2, dadurch gekennzeichnet, daß das Mischen des Pulvers mit dem weiteren feuerfesten Oxid in trockenem Zustand erfolgt.

7. Verfahren nach einem der Ansprüche 1 bis 6, dadurch gekennzeichnet, daß als metallorganische Verbindungen Acetate, Butylate, Stearate o. dgl. Verwendung finden.

8. Verfahren nach einem der Ansprüche 1 bis 7, dadurch gekennzeichnet, daß die metallorganischen Verbindungen des Aluminium und des Zirkonium sowie die zusätzliche Verbindung in einem solchen Verhältnis eingesetzt werden, daß das Gemenge zur Ausbildung der Formkörper Al₂O₃ in einem Anteil von mindestens 30 Gew.% Al₂O₃, ZrO₂ in einem Anteil von 10 bis 60 Gew.% und CeO₂ in einem Anteil von 1 bis 10 Gew.% aufweist.

9. Verfahren nach einem der Ansprüche 1 bis 7, dadurch gekennzeichnet, daß die metallorganischen Verbindungen des Aluminium und des Zirkonium sowie die zusätzliche Verbindung in einem solchen Verhältnis eingesetzt werden, daß das Gemenge zur Ausbildung der Formkörper Al₂O₃ in einem Anteil von mindestens 30 Gew.% Al₂O₃, ZrO₂ in einem Anteil von 10 bis 60 Gew.% und MgO in einem Anteil von 0,4 bis 2,5 Gew.% aufweist.

10. Verfahren nach einem der Ansprüche 1 bis 7, dadurch gekennzeichnet, daß die metallorganischen Verbindungen des Aluminium und des Zirkonium sowie die zusätzliche Verbindung in einem solchen Verhältnis eingesetzt werden, daß das Gemenge zur Ausbildung der Formkörper Al₂O₃ in einem Anteil von mindestens 30 Gew.% Al₂O₃, ZrO₂ in einem Anteil von 10 bis 60 Gew.% und CaO in einem Anteil von 0,5 bis 3 Gew.% aufweist.

11. Verfahren nach einem der Ansprüche 1 bis 7, dadurch gekennzeichnet, daß die metallorganischen Verbindungen des Aluminium und des Zirkonium sowie die zusätzliche Verbindung in einem solchen Verhältnis eingesetzt werden, daß das Gemenge zur Ausbildung der Formkörper Al₂O₃ in einem Anteil von mindestens 30 Gew.% Al₂O₃, ZrO₂ in einem Anteil von 10 bis 60 Gew.% und Y₂O₃ in einem Anteil von 1 bis 8 Gew.% aufweist.

12. Verfahren nach einem der Ansprüche 1 bis 11, dadurch gekennzeichnet, daß das Pulver in der Phase ε-Al₂O₃ eingesetzt wird.

13. Verfahren nach einem oder mehreren der Ansprüche 1 bis 12, dadurch gekennzeichnet, daß das Gemenge aus Aluminiumoxid, Zirkonoxid und dem als Stabilisator dienenden Oxid nach dem Verbrennungsvorgang gemahlen wird.

14. Verfahren nach einem oder mehreren der Ansprüche 1 bis 13, dadurch gekennzeichnet, daß der Sintervorgang bei Temperaturen zwischen 1300 und 1750°C erfolgt.

15. Großformatiger, zur Auskleidung von insbesondere Soda-Kalk-Kieselglasschmelzanlagen dienender Formkörper, der im wesentlichen Al₂O₃ einerseits und ZrO₂ andererseits in feiner, homogener Verteilung enthält, im wesentlichen glasfrei ist und zur Stabilisierung eines nennenswerten Anteils des ZrO₂ einen geringen Anteil eines Oxids eines Elements aus der Stoffgruppe Kalzium, Magnesium, Cer oder Yttrium enthält, wobei der Formkörper grobkörnigen, verteilt angeordneten Anteil von Al₂O₃ sowie eine Bindephase aus Al₂O₃, ZrO₂ und einen Anteil des Oxids aus der Stoffgruppe Kalzium, Magnesium, Cer oder Yttrium aufweist.

16. Formkörper nach Anspruch 15, dadurch gekennzeichnet, daß er Al₂O₃ in einem Anteil von mindestens 30 Gew.%, ZrO₂ in einem Anteil von 10 bis 60 Gew.% und CeO₂ in einem Anteil von 1 bis 10 Gew.% aufweist.

## Claims

1. A process for the manufacture of large-dimensioned moldings used to line, in particular, soda-lime-silica glass-melting installations, wherein a mixture of Al₂O₃, ZrO₂, and a metal oxide stabilizer selected from the group of substances comprising calcium, magnesium, cerium or yttrium is made, the mixture being molded, pressed and compressed, and the moldings sintered, characterized in that metal-organic compounds of aluminum and zirconium are provided as the starting material for the mixture, said compounds being well mixed and converted by a combustion step into a highly disperse ceramic powder, wherein a compound of the element from said group of substances is added before or after the combustion step.

2. The process according to claim 1, characterized in that the powder is mixed with a further refractory oxide, in particular Al₂O₃, and this mixture is then isostatically pressed.

3. The process according to claim 2, characterized in that the further refractory oxide is added in a grain fraction of up to 3.0 mm.

4. The process according to claims 2 and 3, characterized in that the further refractory oxide is admixed in a proportion exceeding that of the powder.

5. The process according to claim 2, characterized in that the further refractory oxide is admixed to the powder by the wet process and then subjected to spray-drying, before pressing is carried out.

6. The process according to claim 2, characterized in that the mixing of the powder with the further refractory oxide is carried out in the dry state.

7. The process according to one of claims 1 to 6, characterized in that acetates, butylates, stearates or the like are used as the metal-organic compounds.

8. The process according to one of claims 1 to 7, characterized in that the metal-organic compounds of aluminum, zirconium, and the additional compound are employed in such a ratio that the powder is produced with a content of at least 30 % Al₂O₃ by weight, ZrO₂ in a proportion of 10 to 60 % by weight, and CeO₂ in a proportion of 1 to 10 % by weight.

9. The process according to one of claims 1 to 7, characterized in that the metal-organic compounds of aluminum, zirconium, and the additional compound are employed in such a ratio that the powder is produced with a content of at least 30 % Al₂O₃ by weight, ZrO₂ in a proportion of 10 to 60 % by weight, and MgO in a proportion of 0.4 to 2.5 % by weight.

10. The process according to one of claims 1 to 7, characterized in that the metal-organic compounds of aluminum, zirconium, and the additional compound are employed in such a ratio that the powder is produced with a content of at least 30 % Al₂O₃ by weight, ZrO₂ in a proportion of 10 to 60 % by weight, and CaO in a proportion of 0.5 to 3 % by weight.

11. The process according to one of claims 1 to 7, characterized in that the metal-organic compounds of aluminum, zirconium, and the additional compound are employed in such a ratio that the powder is produced with a content of at least 30 % Al₂O₃ by weight, ZrO₂ in a proportion of 10 to 60 % by weight, and Y₂O₃ in a proportion of 1 to 8 % by weight.

12. The process according to one of claims 1 to 11, characterized in that the powder is used in the ε-Al₂O₃ phase.

13. The process according to one or more of claims 1 to 12, characterized in that the mixture of aluminum oxide, zirconium oxide and the stabilizer oxide is ground after the combustion step.

14. The process according to one or more of claims 1 to 13, characterized in that the sintering step is carried out in the range of temperatures between 1300°C to 1750°C.

15. A large-dimensioned molding used to line, in particular, soda-lime-silica glass-melting installations, said molding containing essentially Al₂O₃ and ZrO₂ on the one hand, and ZrO₂ on the other hand, in a fine homogeneous distribution, essentially free of glass, and for stabilization of a significant part of ZrO₂ the molding contains a small proportion of a metal oxide from selected from the group of substances comprising calcium, magnesium, cerium or yttrium, and that the molding contains a coarse-grained fraction of Al₂O₃ in a disperse arrangement, a binder phase of Al₂O₃-ZrO₂, and a fraction of the metal oxides from the group of substances comprising calcium, magnesium, cerium or yttrium.

16. The molding according to claim 15, characterized in that said molding contains Al₂O₃ in a proportion of at least 30 % by weight, ZrO₂ in a proportion of 10 to 60 % by weight, and CeO₂ in a proportion of 1 to 10 % by weight.

## Revendications

1. Procédé de fabrication de corps moulés de grand format, servant au revêtement, en particulier, d'installations de fusion de verre à base de soude, chaux et silice, dans lequel on forme un mélange d'oxyde d'aluminium (Al₂O₃), d'oxyde de zirconium (ZrO₂) et d'un oxyde d'un élément du groupe comprenant le calcium, le magnésium, le cérium ou l'yttrium, cet oxyde servant de stabilisant, le mélange étant, pour former les corps moulés, pressé, coulé ou comprimé, et les corps moulés étant soumis à une opération de frittage,
**caractérisé** en ce qu'on utilise comme matière première pour le mélange des composés organométalliques d'aluminium et de zirconium intimement mélangés, que l'on transforme par calcination en une poudre céramique à haute dispersion, en ajoutant un composé de l'élément du groupe précité, avant ou après la calcination.

2. Procédé selon la revendication 1, caractérisé en ce que la poudre est mélangée avec un autre oxyde réfractaire, en particulier Al₂O₃, ce mélange étant ensuite soumis à une compression isostatique.

3. Procédé selon la revendication 2, caractérisé en ce que l'autre oxyde réfractaire est introduit avec une fraction granulométrique allant jusqu'à 3,0 mm.

4. Procédé selon les revendications 2 et 3, caractérisé en ce que l'autre oxyde réfractaire est ajouté en proportion dépassant celle de la poudre.

5. Procédé selon la revendication 2, caractérisé en ce que l'autre oxyde réfractaire est mélangé à la poudre par voie hymide et est ensuite soumis à un séchage par pulvérisation avant le pressage.

6. Procédé selon la revendication 2, caractérisé en ce que le mélange de la poudre avec l'autre oxyde réfractaire a lieu à sec.

7. Procédé selon une des revendications 1 à 6, caractérisé en ce qu'on utilise comme composés organométalliques des acétates, des butylates, des stéarates ou autres.

8. Procédé selon une des revendications 1 à 7, caractérisé en ce que les composés organométalliques d'aluminium et de zirconium, ainsi que les composés supplémentaires, sont utilisés en proportions telles que le mélange destiné à former les corps moulés contient au moins 30% en poids d'Al₂O₃, de 10 à 60% en poids de ZrO₂ et 1 à 10% en poids de CeO₂.

9. Procédé selon une des revendications 1 à 7, caractérisé en ce que les composés organométalliques d'aluminium et de zirconium, ainsi que les composés supplémentaires, sont utilisés en proportions telles que le mélange destiné à former les corps moulés contient au moins 30% en poids d'Al₂O₃, de 10 à 60% en poids de ZrO₂ et 0,4 à 2,5% en poids de MgO.

10. Procédé selon une des revendications 1 à 7, caractérisé en ce que les composés organométalliques d'aluminium et de zirconium, ainsi que les composés supplémentaires, sont introduits en proportions telles que le mélange destiné à former les corps moulés contient au moins 30% en poids d'Al₂O₃, de 10 à 60% en poids de ZrO₂ et 0,5 à 3% en poids de CaO.

11. Procédé selon une des revendications 1 à 7, caractérisé en ce que les composés organométalliques d'aluminium et de zirconium, ainsi que les composés supplémentaires, sont introduits en proportions telles que le mélange destiné à former les corps moulés contient au moins 30% en poids d'Al₂O₃, de 10 à 60% en poids de ZrO₂ et 1 à 8% en poids d'Y₂O₃.

12. Procédé selon une des revendications 1 à 11, caractérisé en ce que la poudre est introduite dans l'Al₂O₃ en phase ε .

13. Procédé selon une ou plusieurs des revendications 1 à 12, caractérisé en ce que le mélange d'oxyde d'aluminium, d'oxyde de zirconium et de l'oxyde servant de stabilisant est broyé après la calcination.

14. Procédé selon une ou plusieurs des revendications 1 à 13, caractérisé en ce que le frittage a lieu à des températures entre 1300 et 1750 °C.

15. Corps moulé de grand format servant au revêtement, en particulier, d'installations de fusion de verre à base de soude, chaux et silice, contenant essentiellement Al₂O₃ d'une part et ZrO₂ d'autre part, en une répartition fine et homogène, étant essentiellement dépourvu de verre, et contenant, pour la stabilisation d'une proportion notable du ZrO₂, une petite part d'un oxyde d'un élément du groupe comprenant le calcium, le magnésium, le cérium ou l'yttrium, le corps moulé contenant une part répartie d'Al₂O₃ en gros grains, ainsi qu'une phase de liaison en Al₂O₃, ZrO₂ et une part de l'oxyde du groupe comprenant le calcium, le magnésium, le cérium ou l'yttrium.

16. Corps moulé selon la revendication 15, caractérisé en ce qu'il contient au moins 30% en poids d'Al₂O₃, de 10 à 60% en poids de ZrO₂ et de 1 à 10% de CeO₂.
